(19)

Europäisches
Patentamt
European
Patent Office
Office européen
des brevets

(11) **EP 4 458 451 A1**

(12) **EUROPEAN PATENT APPLICATION**
published in accordance with Art. 153(4) EPC

(43) Date of publication:
06.11.2024 Bulletin 2024/45

(21) Application number: 22914080.1

(22) Date of filing: 06.12.2022

(51) International Patent Classification (IPC):
*B01D 53/047* (2006.01)  *G01N 15/08* (2006.01)

(52) Cooperative Patent Classification (CPC):
B01D 53/047; G01N 15/08

(86) International application number:
PCT/CN2022/136912

(87) International publication number:
WO 2023/124825 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.12.2021 CN 202111681815

(71) Applicants:
• China Petroleum & Chemical Corporation
Beijing 100728 (CN)
• Sinopec Dalian Research Institute of
Petroleum and Petrochemicals Co., Ltd.
Lushunkou District
Dalian, Liaoning 116045 (CN)

(72) Inventors:
• ZHANG, Shengzhong
Dalian, Liaoning 116045 (CN)
• QIAO, Kai
Dalian, Liaoning 116045 (CN)
• ZHANG, Yanpeng
Dalian, Liaoning 116045 (CN)
• FAN, Dequan
Dalian, Liaoning 116045 (CN)
• YANG, Yang
Dalian, Liaoning 116045 (CN)
• HU, Fangzhou
Dalian, Liaoning 116045 (CN)

(74) Representative: karo IP
Patentanwälte PartG mbB
Steinstraße 16-18
40212 Düsseldorf (DE)

(54) **ADSORBENT SELECTION METHOD, PRESSURE SWING ADSORPTION METHOD, AND SYSTEM THEREFOR**

(57) An adsorbent selection method, a pressure swing adsorption method, and a system therefor. The selection method comprises: obtaining the slope at an initial pressure of an adsorption isotherm with respect to a target adsorbate of each adsorbent among a plurality of adsorbents, wherein each adsorption isotherm is a curve representing adsorption capacity varying with pressure at a specific temperature; obtaining the adsorption capacity of each adsorbent on the target adsorbate under the specific temperature and a specific pressure; and selecting a target adsorbent for adsorbing the target adsorbate from the plurality of adsorbents according to the slope and the adsorption capacity of each adsorbent. In a pressure swing adsorption process, a pressure swing adsorption cycle can be optimized, the amount of an adsorbent used can be reduced, and operation and production costs of pressure swing adsorption can consequently be reduced.

Acquiring a slope of an adsorption isotherm of each adsorbent of a plurality of adsorbents adsorbing a target adsorbate at an initial pressure — S101

Acquiring an adsorption amount of the target adsorbate adsorbed by the each adsorbent at the specific temperature and a specific pressure — S102

selecting a target adsorbent for adsorbing the target adsorbate from the plurality of the adsorbents according to the slope and the adsorption amount for the each adsorbent — S103

FIG. 1

**Description**

**Cross Reference to Related Applications**

This application claims the benefit of Chinese patent application 202111681815.7, filed on December 31, 2021, the contents of which are incorporated herein by reference.

**Field of the Invention**

Embodiments of the present disclosure relate to the technical field of adsorption separation, in particular to an adsorbent selection method, a pressure swing adsorption method, an adsorbent selection system and a pressure swing adsorption system.

**Background of the Invention**

A pressure swing adsorption technique can be used for the purification of gases such as hydrogen, helium, nitrogen and the like, and also used for industrial processes such as carbon dioxide capture, recovery of lower hydrocarbons and the like. According to different application scenarios, an adsorbent selected for pressure swing adsorption can adsorb impurities that need to be removed or products that need to be produced, and the impurities or products adsorbed by the adsorbent are referred to as adsorbates. Adsorbents, control processes and equipment are a key to application of the pressure swing adsorption technology to production.

Selecting adsorbents based on different adsorbates, and matching with corresponding control processes, and further selecting reliable equipment are a general process for realizing an optimized production scheme for pressure swing adsorption. In general, pressure swing adsorption achieves continuous production by sequential switching of not less than two columns, each column is charged with the same type and weight of adsorbent, and a certain amount of adsorbent is charged in one adsorption column, and a product recovery rate can be improved by prolonging an adsorption period; and if the adsorbent charging amount is reduced, the product recovery rate can be ensured by shortening the adsorption period, and the floor space of a device is reduced.

In the prior art, the corresponding adsorbents are selected mainly empirically for different adsorbates. Therefore, it is usually necessary to charge an excess of adsorbent and set a longer adsorption period to achieve the purpose of sufficient adsorption.

From the perspective of sustainable development, reducing the floor space of the device by reducing the amount of adsorbents used, and thus reducing the volume of an adsorbent column under the condition of ensuring the overall performance of a pressure swing adsorption device is a more optimal selection. Therefore, for the gas pressure swing adsorption process of the same raw materials, how to optimize a pressure swing adsorption period, reducing the amount of adsorbents used, and thus reducing the floor space of the device and the total weight is an urgent problem to be solved.

**Summary of the Invention**

An object of the present disclosure is to provide an adsorbent selection method, a pressure swing adsorption method, an adsorbent selection system and a pressure swing adsorption system. A target adsorbent can be selected based on a slope of an adsorption isotherm at an initial pressure and an adsorption amount of a target adsorbate by an adsorbent at a specific temperature and a specific pressure, so that a pressure swing adsorption period can be optimized during a pressure swing adsorption process, the amount of adsorbents used can be reduced, and then the operating and production costs of the pressure swing adsorption can be reduced.

In order to achieve the above object, in a first aspect, the present disclosure provides an adsorbent selection method, including: acquiring a slope of an adsorption isotherm of each adsorbent of a plurality of adsorbents absorbing a target adsorbate at an initial pressure, wherein the adsorption isotherm is a curve of an adsorption amount as a function of pressure at a specific temperature; acquiring an adsorption amount of the target adsorbate absorbed by the each adsorbent at the specific temperature and a specific pressure; and selecting a target adsorbent for adsorbing the target adsorbate from the plurality of the adsorbents according to the slope and the adsorption amount for the each adsorbent.

Optionally, wherein selecting the target adsorbent for adsorbing the target adsorbate from the plurality of the adsorbents comprises: determining a minimum time for each decomposition step in a cycle period of pressure swing adsorption for the each adsorbent according to the slope for the each adsorbent; selecting a specific adsorbent from the plurality of the adsorbents according to the determined minimum time, wherein a minimum time corresponding to the specific adsorbent is less than or equal to a preset time; determining a product of a slope and an adsorption amount for the specific adsorbent; and selecting an adsorbent corresponding to the largest product as the target adsorbent.

Optionally, wherein determining the minimum time for each decomposition step in the cycle period of pressure swing adsorption for the each adsorbent comprises: in a case where a slope of an adsorbent is greater than a first slope and less than or equal to a second slope, a minimum time corresponding to the adsorbent is greater than or equal to a first minimum time; in a case where a slope of an adsorbent is greater than the second slope and less than or equal to a third slope, a minimum time corresponding to the adsorbent is greater than or equal to a second a minimum time; in a case where a slope of an adsorbent is greater than the third slope and less than or equal to a fourth slope, a minimum time corresponding to the adsorbent is greater than or equal to a third minimum time; or in a case where a slope of an adsorbent is greater than the fourth slope and less than or equal to a fifth slope, a minimum time corresponding to the adsorbent is greater than or equal to a fourth minimum time, wherein the first slope, the second slope, the third slope, the fourth slope, and the fifth slope gradually increase; and the first minimum time, the second minimum time, the third minimum time, and the fourth minimum time gradually increase.

Optionally, wherein in a case where the first slope is 1, the second slope is 10, the third slope is 20, the fourth slope is 30 and the fifth slope is 50, the first minimum time is 0.05 s, the second minimum time is 3 s, the third minimum time is 9 s and the fourth minimum time is 24 s.

Optionally, wherein determining the minimum time t for each decomposition step in the cycle period of pressure swing adsorption for the each adsorbent comprises:

$$t = \frac{-40}{1 + e^{(k_0 - 27)/6}} + \text{T},$$

wherein $T$ is a preset longest step time in s; and $k_0$ is a slope for the each adsorbent.

Optionally, wherein $T$ is less than or equal to 40.

Optionally, further comprising: determining a minimum time corresponding to the target adsorbent as an adsorption time; and determining the amount of the target adsorbent according to the amount of the target adsorbate introduced into an adsorption column in the adsorption time and an adsorption amount of the target adsorbent.

Optionally, wherein the step of acquiring the slope of the adsorption isotherm of each adsorbent of the plurality of the adsorbents absorbing the target adsorbate at the initial pressure is performed under the condition that preset preconditions are met, wherein the preset preconditions comprise that: an absolute value of a difference between the adsorption amounts of an adsorption isotherm and a desorption isotherm of the each adsorbent for the target adsorbate at each pressure is less than or equal to a preset ratio of an adsorption amount of an adsorption isotherm.

Optionally, wherein the preset preconditions further comprise that: the adsorption amount of the adsorption isotherm of the each adsorbent absorbing the target adsorbate at each pressure is less than or equal to the adsorption amount of the desorption isotherm, wherein the desorption isotherm is a curve of a desorption amount as a function of pressure at the specific temperature.

Optionally, wherein the specific temperature is in the range from 10°C to 40°C.

Optionally, wherein the initial pressure is less than or equal to 10 kPa.

Optionally, wherein the adsorbents are selected from: a microporous molecular sieve; MOFs; a carbon molecular sieve; a special adsorbent and silica gel.

By the above technical solution, in the present disclosure, the target adsorbent for adsorbing the target adsorbate is inventively selected from the plurality of the adsorbents according to the slope of the adsorption isotherm of each adsorbent of the plurality of the adsorbents absorbing the target adsorbate at the initial pressure and the adsorption amount of the target adsorbate absorbed by the each adsorbent at the specific temperature and the specific pressure, so that a pressure swing adsorption period can be optimized during a pressure swing adsorption process, the amount of adsorbents used can be reduced, and then the operating and production costs of the pressure swing adsorption can be reduced.

In a second aspect, the present disclosure provides a pressure swing adsorption method, including: selecting a target adsorbent for adsorbing one or more target adsorbates according to the adsorbent selection method; and performing pressure swing adsorption on the one or more target adsorbates by using the target adsorbent.

Optionally, further comprising: in a case where a slope of an adsorption isotherm of the target adsorbent at an initial pressure point is greater than a first preset slope and less than or equal to a second preset slope, controlling a process timing sequence of pressure swing adsorption by adopting an integrated rotary valve; or in a case where a slope of an adsorption isotherm of the target adsorbent at an initial pressure point is greater than the second preset slope and less than or equal to a third preset slope, controlling a process timing sequence of pressure swing adsorption by adopting a program control valve.

Optionally, wherein in a case where a plurality of target adsorbents are provided, the pressure swing adsorption method further comprises: grading the plurality of the target adsorbents, and performing pressure swing adsorption on the one or more target adsorbates by using the target adsorbent at the specific temperature comprises performing pressure swing adsorption on the one or more target adsorbates by using the plurality of the target adsorbates graded at the specific temperature.

Optionally, further comprising: setting a minimum time for each decomposition step in a cycle period of pressure swing adsorption according to a slope for an adsorbent having a maximum slope of an adsorption isotherm at an initial pressure in the plurality of the target adsorbents.

By the above technical solution, the target adsorbent for adsorbing one or more target adsorbates is selected according to the adsorbent selection method, and then pressure swing adsorption is performed on the one or more target adsorbates by using the target adsorbent at the specific temperature. Therefore, the operating and production costs of the pressure swing adsorption can be reduced by reducing the amount of adsorbents used and optimizing the pressure swing adsorption period.

In a third aspect, the present disclosure provides an adsorbent selection system, including: a memory configured to store an adsorption isotherm of each adsorbent of a plurality of adsorbents absorbing a target adsorbate; and a processor configured to: acquire a slope of an adsorption isotherm of the each adsorbent absorbing the target adsorbate at an initial pressure, wherein the adsorption isotherm is a curve of an adsorption amount as a function of pressure at a specific temperature; acquire an adsorption amount of the target adsorbate absorbed by the each adsorbent at the specific temperature and a specific pressure; and select a target adsorbent for adsorbing the target adsorbate from the plurality of the adsorbents according to the slope and the adsorption amount for the each adsorbent.

Specific details and benefits of the absorbent selection system provided by the present disclosure can refer to the above description of the adsorbent selection method, which will not be repeated here.

In a fourth aspect, the present disclosure provides a pressure swing adsorption system, including: the adsorbent selection system configured to select a target adsorbent for adsorbing one or more target adsorbates; and an adsorption device configured to perform pressure swing adsorption on the one or more target adsorbates by using the target adsorbent at a specific temperature.

Specific details and benefits of the pressure swing adsorption system provided by the present disclosure can refer to the above description of the pressure swing adsorption method, which will not be repeated here.

In a fifth aspect, the present disclosure provides a computer-readable storage medium, having stored thereon a computer program which, when executed by a processor, implements the adsorbent selection method as described above and/or the pressure swing adsorption method as described above.

Other features and advantages of the present disclosure will be described in detail in the Detailed Description section that follows.

## Brief Description of Drawings

The accompanying drawings are used to provide a further understanding of the embodiments of the present disclosure and constitute a part of this description, and are used to explain the embodiments of the present disclosure together with the following specific embodiments, but do not constitute limitations of the embodiments of the present disclosure. In the drawings:

FIG. 1 is a flow chart of an adsorbent selection method according to an embodiment of the present disclosure;
FIG. 2 is a flow chart of selecting a target adsorbent for adsorbing the target adsorbate from the plurality of the adsorbents according to an embodiment of the present disclosure;
FIG. 3 is an adsorption isotherm and a desorption isotherm of one adsorbent for a certain adsorbate;
FIG. 4 shows a slope curve of the adsorption isotherm in FIG. 3 and a slope curve of the desorption isotherm in FIG. 3;
FIG. 5 is an adsorption isotherm and a desorption isotherm of one adsorbent for a certain adsorbate;
FIG. 6 shows a slope curve of the adsorption isotherm in FIG. 5 and a slope curve of the desorption isotherm in FIG. 5;
FIG. 7 is an adsorption isotherm and a desorption isotherm of another adsorbent for a certain adsorbate;
FIG. 8 shows a slope curve of the adsorption isotherm in FIG. 7 and a slope curve of the desorption isotherm in FIG. 7;
FIG. 9 is an adsorption isotherm and a desorption isotherm of another adsorbent for a certain adsorbate;
FIG. 10 shows a slope curve of the adsorption isotherm in FIG. 9 and a slope curve of the desorption isotherm in FIG. 9;
FIG. 11 shows an adsorption isotherm of one adsorbent for a certain adsorbate, and a slope curve of the adsorption isotherm; and
FIG. 12 shows an adsorption isotherm of one adsorbent for a certain adsorbate, and a slope curve of the adsorption isotherm.

## Detailed Description of the Embodiments

The specific embodiments of the present disclosure will be described below in detail with reference to the accompanying drawings. It should be understood that the specific embodiments described herein are merely illustrative and explanatory of the present disclosure, and are not intended to limit the present disclosure.

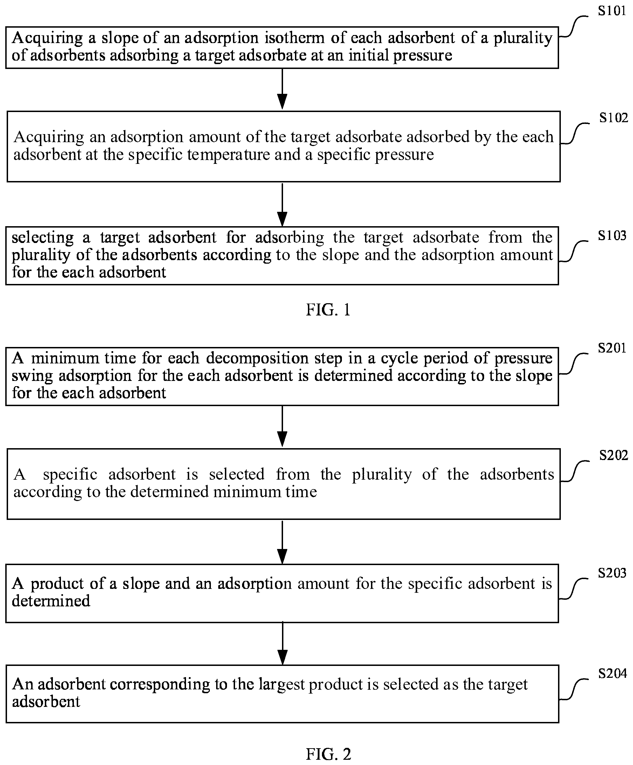

FIG. 1 is a flow chart of an adsorbent selection method according to an embodiment of the present disclosure. As shown in FIG. 1, the selection method may include: Step S101, acquiring a slope of an adsorption isotherm of each adsorbent of a plurality of adsorbents adsorbing a target adsorbate at an initial pressure, wherein the adsorption isotherm is a curve of an adsorption amount as a function of pressure at a specific temperature; Step S102, acquiring an adsorption amount of the target adsorbate adsorbed by the each adsorbent at the specific temperature and a specific pressure; and Step S103, selecting a target adsorbent for adsorbing the target adsorbate from the plurality of the adsorbents according to the slope and the adsorption amount for the each adsorbent.

In this embodiment, by selecting the adsorbent for the target adsorbate, a pressure swing adsorption cycle with a fast period can be achieved, the pressure swing adsorption process flow can be optimized, the amount of adsorbents used can be reduced, the floor space and weight of a pressure swing adsorption device on a same production scale (an equal amount of feed gas with the same impurity composition and content) can be effectively reduced, and the operating and production costs of the pressure swing adsorption can be reduced.

Before performing the step S101, a coincidence degree of an adsorption isotherm and a desorption isotherm of each adsorbent adsorbing a target adsorbate may be firstly obtained, and then judged. If the coincidence degree is higher, it indicates that the adsorbed adsorbate is sufficiently desorbed and the desorption ability is stronger, and the step S101 is performed; otherwise, no corresponding subsequent steps need to be performed for this adsorbent.

Wherein the coincidence degree of the adsorption isotherm and the desorption isotherm refers to a coincidence degree of the adsorption amounts of the two curves under the same pressure. Specifically, the adsorption isotherm refers to a static adsorption isotherm, which has the characteristics of being good in repeatability, easy to obtain, and almost applicable to the performance characterization of all adsorbents; and the desorption isotherm refers to an adsorption amount isotherm obtained when an adsorbent completing a static adsorption isotherm test starts to be desorbed under reduced pressure under the same temperature conditions. A test method of the adsorption isotherm is as follows: the abscissa is pressure in bar, and the ordinate is the adsorption amount in ml/g; and the obtained adsorption isotherm represents the equilibrium adsorption amount of an adsorbent per unit mass at a certain adsorbate pressure.

In one embodiment, the step of acquiring the slope of the adsorption isotherm of each adsorbent of the plurality of the adsorbents adsorbing the target adsorbate at the initial pressure (i.e., the step S101) is performed under the condition that preset preconditions are met.

Wherein the preset preconditions may include that: an absolute value of a difference between the adsorption amounts of an adsorption isotherm and a desorption isotherm of the each adsorbent adsorbing the target adsorbate at each pressure is less than or equal to a preset ratio (e.g., 15%) of an adsorption amount of an adsorption isotherm.

Wherein the desorption isotherm is a curve of a desorption amount as a function of pressure at the specific temperature. The specific temperature is normal temperature (e.g., in the range from 10°C to 40°C), preferably 25°C.

Preferably, the preset preconditions may further include that: the adsorption amount of the adsorption isotherm of the each adsorbent adsorbing the target adsorbate at each pressure is less than or equal to the adsorption amount of the desorption isotherm. Therefore, the adsorbed adsorbate can be completely and quickly desorbed.

Step S101, a slope of an adsorption isotherm of each adsorbent of a plurality of adsorbents adsorbimg a target adsorbate at an initial pressure is acquired.

Wherein the adsorption isotherm is a curve of an adsorption amount as a function of pressure at a specific temperature. The specific temperature is normal temperature (e.g., in the range from 10°C to 40°C), preferably 25°C. Where no specific temperature value is specifically indicated herein, it defaults to 25°C.

Wherein the initial pressure is less than or equal to 10 kPa. This pressure value setting may be the same for different absorbents.

Wherein the adsorbent is selected from: a microporous molecular sieve; MOFs; a carbon molecular sieve; a special adsorbent filled with a specific material (e.g., filled with a metallic material such as Cu/Zn) in a microporous molecular sieve, MOFs or a carbon molecular sieve; and silica gel.

For example, shaped adsorbents have a particle size ranging from 0.4 mm to 2.5 mm, and may be in the form of spheres, strips, columns or a core-shell type. For structured adsorbents, an adsorbent coating has a thickness in the range from 50 μm to 400 μm. The structured adsorbents generally mean that a porous support is coated with adsorbent powder, wherein the porous support may be a metal sintered porous material, an alumina sintered porous material, an organic glass fiber porous material, or the like.

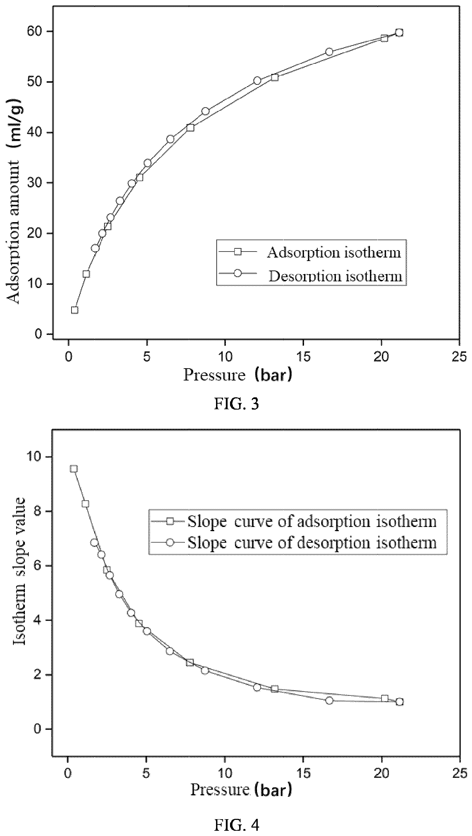

Specifically, first, a static adsorption isotherm and a desorption isotherm of an adsorbent at a specific temperature are measured (as shown in FIG. 3, FIG. 5, FIG. 7, FIG. 9, and FIGS. 11-12), and further a derivative (a tangent slope) of a fitting curve of the adsorption isotherm and the desorption isotherm is taken to obtain a tangent slope for each point and obtain an isotherm slope curve (as shown in FIG. 4, FIG. 6, FIG. 8, and FIGS. 10-12), so that a slope of each adsorption isotherm at an initial pressure can be obtained. Of course, it is also possible to obtain only the slope at the initial pressure.

Step S102, an adsorption amount of the target adsorbate adsorbed by the each adsorbent at the specific temperature and a specific pressure is acquired.

From the adsorption isotherm of each adsorbent adsorbing the target adsorbate, the adsorption amount of the target adsorbate adsorbed by the each adsorbent at the specific temperature and specific pressure (e.g., 1 bar) can be obtained. Where no specific pressure value is specifically indicated herein, it may default to 1 bar. Of course, the specific pressure means a reasonable pressure for measuring the adsorption amount, which can be reasonably set according to the actual situation, and is not limited to 1 bar.

Step S103, a target adsorbent for adsorbing the target adsorbate is selected from the plurality of the adsorbents according to the slope and the adsorption amount for the each adsorbent.

For the step S103, as shown in FIG. 2, selecting the target adsorbent for adsorbing the target adsorbate from the plurality of the adsorbents may include the following steps S201 to S204.

Step S201, a minimum time for each decomposition step in a cycle period of pressure swing adsorption for the each adsorbent is determined according to the slope for the each adsorbent.

Based on the determined minimum time for each decomposition step, the overall cycle period (the adsorption period) can be determined.

In one embodiment, for the step S201, determining the minimum time for each decomposition step in the cycle period of pressure swing adsorption for the each adsorbent includes: in a case where a slope for an adsorbent is greater than a first slope and less than or equal to a second slope, a minimum time corresponding to the adsorbent is greater than or equal to a first minimum time; in a case where a slope for an adsorbent is greater than the second slope and less than or equal to a third slope, a minimum time corresponding to the adsorbent is greater than or equal to a second minimum time; in a case where a slope for an adsorbent is greater than the third slope and less than or equal to a fourth slope, a minimum time corresponding to the adsorbent is greater than or equal to a third minimum time; or in a case where a slope for an adsorbent is greater than the fourth slope and less than or equal to a fifth slope, a minimum time corresponding to the adsorbent is greater than or equal to a fourth minimum time.

Wherein the first slope, the second slope, the third slope, the fourth slope, and the fifth slope gradually increase; and the first minimum time, the second minimum time, the third minimum time, and the fourth minimum time gradually increase.

In a case where the first slope is 1, the second slope is 10, the third slope is 20, the fourth slope is 30 and the fifth slope is 50, the first minimum time is 0.05 s, the second minimum time is 3 s, the third minimum time is 9 s and the fourth minimum time is 24 s.

Specifically, if a slope of an adsorption isotherm of an adsorbent for a target adsorbate at an initial pressure point is greater than 50, it can be determined that the adsorbent is not suitable for the continuous production process of pressure swing adsorption at normal temperature. When a slope of an adsorption isotherm of an adsorbent for a target adsorbate at an initial pressure point is less than or equal to 50, the adsorbent is suitable for use in the pressure swing adsorption process at room temperature, and cyclic adsorption and regeneration (i.e., a depressurized regeneration process) of the adsorbent can be achieved within a suitable pressure swing adsorption cycle time.

For example, when a slope $k_0$ of an adsorption isotherm of the selected adsorbent at an initial pressure point is greater than 1 and less than or equal to 10, the time for each decomposition step in the cycle period of pressure swing adsorption is greater than or equal to 0.05 s; when the slope $k_0$ of the adsorption isotherm of the selected adsorbent at the initial pressure point is greater than 10 and less than or equal to 20, the time for each decomposition step in the cycle period of pressure swing adsorption is greater than or equal to 3 s; when the slope $k_0$ of the adsorption isotherm of the selected adsorbent at the initial pressure point is greater than 20 and less than or equal to 30, the time for each decomposition step in the cycle period of pressure swing adsorption is greater than or equal to 9 s; and when the slope $k_0$ of the adsorption isotherm of the selected adsorbent at the initial pressure point is greater than 30 and less than or equal to 50, the time for each decomposition step in the cycle period of pressure swing adsorption is greater than or equal to 24 s.

When an adsorption isotherm and a desorption isotherm of an adsorbent for a certain adsorbate and corresponding slope curves are determined as shown in FIGS. 3 and 4, the adsorbent is suitable for use in pressure swing adsorption with a fast period, with the time for each decomposition step in a cycle period being greater than or equal to 0.05 s.

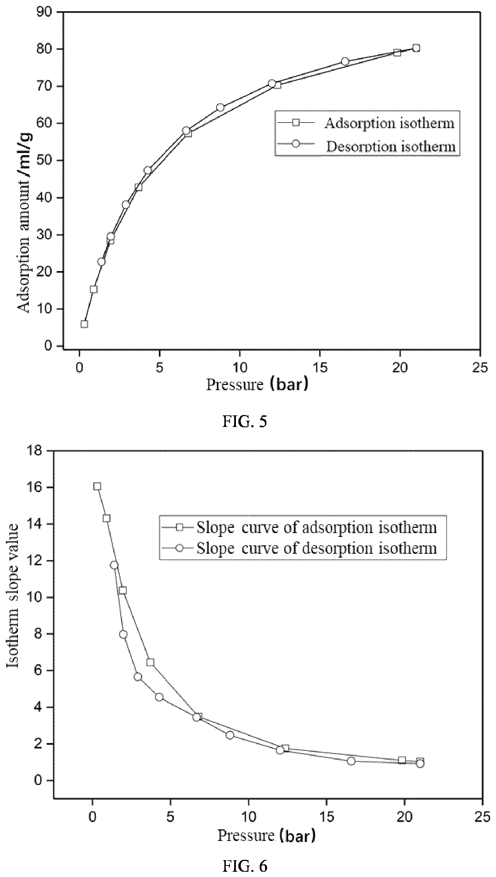

When an adsorption isotherm and a desorption isotherm of an adsorbent for a certain adsorbate and corresponding slope curves are determined as shown in FIGS. 5 and 6, the adsorbent is suitable for use in pressure swing adsorption with a fast period, with the time for each decomposition step in a cycle period being greater than or equal to 3 s.

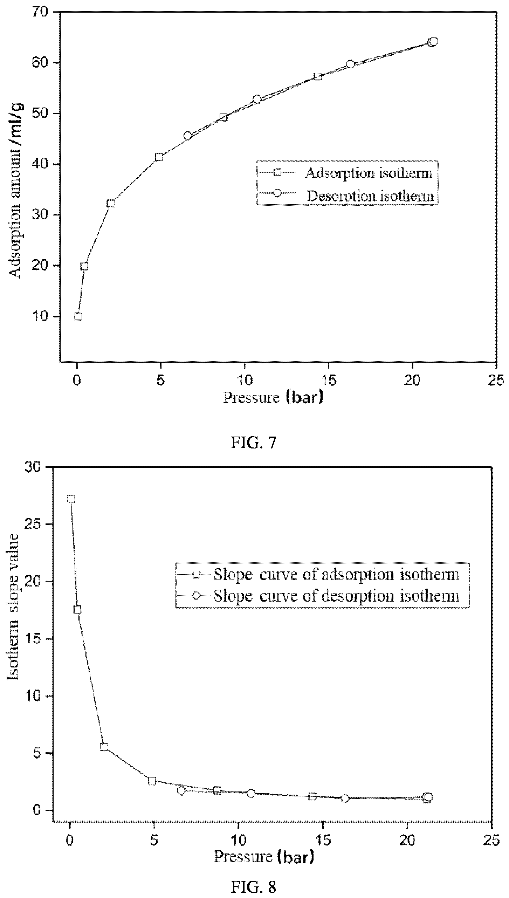

When an adsorption isotherm and a desorption isotherm of an adsorbent for a certain adsorbate and corresponding slope curves are determined as shown in FIGS. 7 and 8, the adsorbent is suitable for use in pressure swing adsorption with a fast period, with the time for each decomposition step in a cycle period being greater than or equal to 9 s.

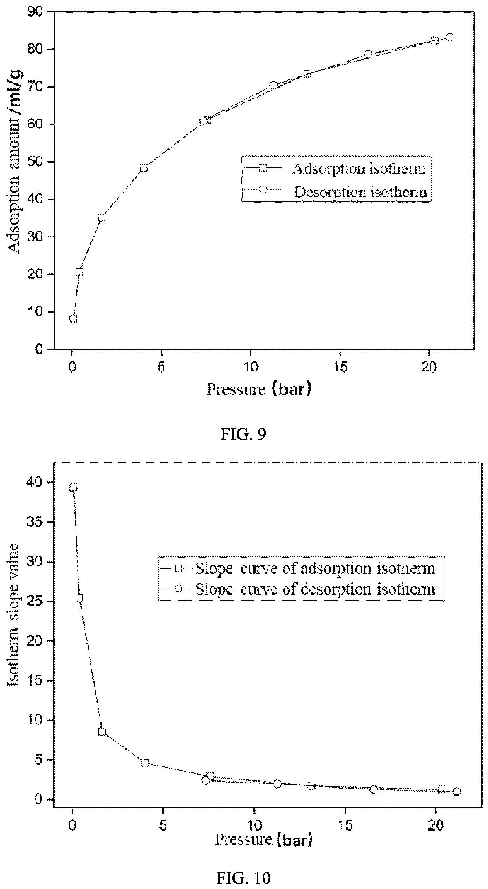

When an adsorption isotherm and a desorption isotherm of an adsorbent for a certain adsorbate and corresponding slope curves are determined as shown in FIGS. 9 and 10, the adsorbent is suitable for use in pressure swing adsorption with a fast period, with the time for each decomposition step in a cycle period being greater than or equal to 24 s.

When a gas source contains a plurality of adsorbate components, adsorbents selected according to the above method may be graded, and a suitable cycle period of a composite bed where a plurality of adsorbents are graded is determined by an adsorbent having the longest time required for the decomposition steps.

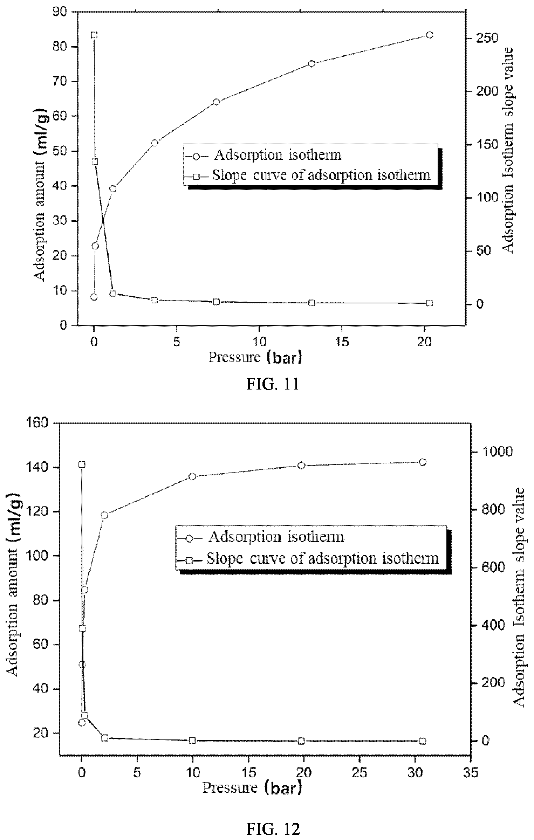

When an adsorption isotherm of an adsorbent for a certain adsorbate and a tangent slope curve of the adsorption isotherm are determined as shown in FIG. 11 or FIG. 12, a desorption isotherm at the same temperature cannot be obtained because the adsorbent cannot be desorbed at a measurement temperature; and at the same time, a slope of an adsorption isotherm of the adsorbent at an initial pressure point is greater than 50, and the adsorbent cannot be used to achieve the pressure swing adsorption process at normal temperature.

Thus, the above embodiment may be applicable to a depressurized regeneration process. For other processes, $k_0$ may be in other reasonable ranges, e.g., $50 < k_0 \leq 200$, and the time for each decomposition step in a cycle period of pressure swing adsorption corresponding to the different sub-ranges may also be determined for different sub-ranges.

In another embodiment, for the step S201, determining the minimum time t (in s) for each decomposition step in the cycle period of pressure swing adsorption for the each adsorbent may include:

$$t = \frac{-40}{1 + e^{(k_0 - 27)/6}} + \mathrm{T},$$

wherein $T$ is a preset longest step time in s; and $k_0$ is a slope for the each adsorbent.

Since this embodiment is suitable for the pressure swing adsorption process with a fast period, T is less than or equal to 40 (herein, T=40 by default unless otherwise specified). In a case where $k_0$ is obtained according to the step S101, the minimum time t for the decomposition steps corresponding to each adsorbent can be determined according to the above formula.

Thus, the above embodiment is very broad in application range, and is applicable not only to a depressurized regeneration process (without vacuuming), but also to adsorbent selection and grading using vacuuming and including a purging process, and the results of the minimum time determined accordingly are also very accurate.

Step S202, a specific adsorbent is selected from the plurality of the adsorbents according to the determined minimum time.

Wherein a minimum time corresponding to the specific adsorbent is less than or equal to a preset time. The preset time can be reasonably set according to the actual situation: for example, the preset time can be set to be 15.10 s (which corresponds to a slope of 24).

Table 1 Specific parameters for adsorption of adsorbate $N_2$ by three adsorbents

| Absorbent | Adsorbate | Slope at an initial point | Minimum time (s) |
|---|---|---|---|
| Molecular sieve 1 | $N_2$ | 21 | 10.76 |
| Molecular sieve 2 | $N_2$ | 7 | 1.38 |
| Activated carbon 1 | $N_2$ | 8 | 1.62 |

The minimum time in Table 1 is obtained according to the calculation formula for t. For Table 1, the minimum time corresponding to each of the three adsorbents is less than 15.10 s, so the three adsorbents can be selected. The period of pressure swing adsorption can be optimized by this step to achieve rapid adsorption.

Step S203, a product of a slope and an adsorption amount for the specific adsorbent is determined.

For example, according to the slope and the adsorption amount for each adsorbent described below, the corresponding products are determined, as shown in Table 2.

Table 2 Specific parameters for adsorption of adsorbate $N_2$ by three adsorbents

| Absorbent | Adsorbate | Slope at an initial point | Adsorption amount | Product |
|---|---|---|---|---|
| Molecular sieve 1 | $N_2$ | 21 | 18 | 378 |
| Molecular sieve 2 | $N_2$ | 7 | 7.5 | 52.5 |
| Activated carbon 1 | $N_2$ | 8 | 9.2 | 73.6 |

Step S204, an adsorbent corresponding to the largest product is selected as the target adsorbent.

For example, a product value of a slope of an adsorption isotherm at an initial pressure and an adsorption amount (1 bar/25°C) of a molecular sieve 1 is the largest, so the molecular sieve 1 is determined as a target adsorbent. Efficient adsorption of a target adsorbate can be achieved by using a small amount of target adsorbent by this step, reducing the volume of an adsorption column.

Accordingly, the pressure swing adsorption period can be optimized by the various embodiments described above, the amount of adsorbents used can be reduced, and the operating and production costs of the pressure swing adsorption can be reduced, thereby ensuring a product recovery rate while satisfying the productivity of a pressure swing adsorption device.

In one embodiment, the selection method further includes: determining a minimum time corresponding to the target adsorbent as an adsorption time; and determining the amount of the target adsorbent according to the amount of the target adsorbate introduced into an adsorption column in the adsorption time and an adsorption amount of the target adsorbent.

For example, the minimum time corresponding to the target adsorbent determined by the step S201 is determined as the adsorption time; then, the amount of the target adsorbate introduced into the adsorption column in the adsorption time can be determined, and in combination with the adsorption amount of the target adsorbent, the amount of the target adsorbate can be determined.

The various embodiments described above can be used to select adsorbents for various target adsorbates, while the alternative adsorbents are not particularly limited, and thus, the application range is wide.

To sum up, in the present disclosure, the target adsorbent for adsorbing the target adsorbate is inventively selected from the plurality of the adsorbents according to the slope of the adsorption isotherm of each adsorbent of the plurality of the adsorbents adsorbing the target adsorbate at the initial pressure and the adsorption amount of the target adsorbate adsorbed by the each adsorbent at the specific temperature and the specific pressure, so that a pressure swing adsorption period can be optimized during a pressure swing adsorption process, the amount of adsorbents used can be reduced, and then the operating and production costs of the pressure swing adsorption can be reduced.

An embodiment of the present disclosure further provides a pressure swing adsorption method, including: selecting a target adsorbent for adsorbing one or more target adsorbates according to the adsorbent selection method; and performing pressure swing adsorption on the one or more target adsorbates by using the target adsorbent at a specific temperature.

In one embodiment, the pressure swing adsorption method further includes: in a case where a slope of an adsorption isotherm of the target adsorbent at an initial pressure point is greater than a first preset slope and less than or equal to a second preset slope, controlling a process timing sequence of pressure swing adsorption by adopting an integrated rotary valve; or in a case where a slope of an adsorption isotherm of the target adsorbent at an initial pressure point is greater than the second preset slope and less than or equal to a third preset slope, controlling a process timing sequence of pressure swing adsorption by adopting a program control valve.

For example, when a slope of an adsorption isotherm of the selected adsorbent at an initial pressure satisfies $1<k_0\leq20$, the process timing sequence is achieved by adopting the integrated rotary valve, and thus, very precise control can be achieved; and the process timing sequence is achieved by adopting the program control valve when the slope of the adsorption isotherm of the selected adsorbent at the initial pressure satisfies $20<k_0\leq50$.

In another embodiment, in a case where a plurality of target adsorbents are provided, the pressure swing adsorption method further includes: grading the plurality of the target adsorbents, and performing pressure swing adsorption on the one or more target adsorbates by using the target adsorbent at a specific temperature includes performing pressure swing adsorption on the one or more target adsorbates by using the plurality of the target adsorbents graded at the specific temperature.

The pressure swing adsorption method further includes setting a minimum time for each decomposition step in a cycle period of pressure swing adsorption according to a slope for an adsorbent having a maximum slope of an adsorption isotherm at an initial pressure in the plurality of the target adsorbents.

Specifically, when there are a plurality of target adsorbates, for example, a feed gas includes a plurality of components, adsorbents are selected one by one for the plurality of the target adsorbates, and the plurality of the adsorbents selected are graded. In one embodiment, grading refers to arranging beds where the plurality of the target adsorbates are located according to the molecular weight of the target adsorbates, and the target adsorbates are sequentially adsorbed from large to small according to the molecular weight of the corresponding target adsorbates. The same adsorbent is generally more likely to adsorb adsorbates with a high molecular weight, however, impurities with a high molecular weight are less likely to be desorbed, thus allowing the graded adsorbents to adsorb adsorbates sequentially according to the molecular weight to facilitate desorption of the adsorbents.

Further, the minimum time for each decomposition step in the cycle period of pressure swing adsorption is determined by a target adsorbent having the greatest slope of the adsorption isotherm at the initial pressure in the graded target adsorbents. The relationship between the minimum time for each decomposition step in the cycle period of pressure swing adsorption for each adsorbent and the slope of the adsorption isotherm at the initial pressure point refers to the description in the above technical solution, which will not be repeated here.

Further, the process timing sequence of the cycle period of the pressure swing adsorption includes the steps of adsorption, depressurizing for pressure equalizing, desorption and pressurizing for pressure equalizing in a time sequence.

Further, a process flow in which the number of adsorption columns-the number of columns simultaneously in an adsorption state-the number of pressure equalizations is 10-3-4, 12-3-6, 4-1-2, 6-1-2, 8-2-3, 8-2-2, or 9-2-3 is employed.

This embodiment also provide for an adsorbent grading method, providing a simple and feasible implementation method for a grading scheme of adsorbents for pressure swing adsorption with a fast period.

The fast-period pressure swing adsorption method in the above embodiments can meet the requirements of the pressure swing adsorption cycle period of various lengths of time by selection of the adsorbents, without the need for an additional process timing sequence to compensate for the desorption performance of the adsorbents; and the productivity of the beds for the adsorbents is increased, the energy consumption of the regeneration process is reduced, e.g., the amount of purging regeneration gas used is reduced, the power consumption of vacuuming is reduced, or vacuuming is even omitted, thereby reducing the energy consumption of the whole process, and effectively increasing the overall efficiency.

Taking a typical 8-2-2 (i.e., eight adsorption columns, two adsorption columns being simultaneously in the adsorption step, and each cycle being subjected to twice depressurizing for pressure equalizing and pressurizing for pressure equalizing) process as an example, the pressure swing adsorption period is the time from the start of first adsorption in an adsorption column to the completion of final pressurizing and being ready for the start of next adsorption, and the time of each pressure swing adsorption period is the sum of the times for all the decomposition steps. Referring to Table 3, if the time for each decomposition step is 30 s, then the overall pressure swing adsorption period is 480 s (8 min). In Table 3, adsorbing represents an adsorption step; pressurizing represents a final pressurizing step; depressurizing 1/pressurizing 1 represents a step of first depressurizing/pressurizing for pressure equalizing; depressurizing 2/pressurizing 2 represents a step of second depressurizing/pressurizing for pressure equalizing; co-current represents a co-current depressurization step; counter-current represents a counter-current depressurization step; and purging represents a step of purging with a co-current depressurization gas.

Table 3 Decomposition steps for typical 8-2-2 process

| Step time/s | 30 | 30 | 30 | 30 | 30 | 30 | 30 | 30 | 30 | 30 | 30 | 30 | 30 | 30 | 30 | 30 |
|---|---|---|---|---|---|---|---|---|---|---|---|---|---|---|---|---|
| Step/adsorption column | 1 | 2 | 3 | 4 | 5 | 6 | 7 | 8 | 9 | 10 | 11 | 12 | 13 | 14 | 15 | 16 |
| A | Adsorbing | Adsorbing | Adsorbing | Adsorbing | Depressurizing 1 | Depressurizing 2 | Co-current | Counter-current | Counter-current | Counter-current | Purging | Counter-current | Counter-current | Pressurizing 2 | Pressurizing 1 | Pressurizing |
| B | Pressurizing 1 | Pressurizing | Adsorbing | Adsorbing | Adsorbing | Adsorbing | Depressurizing 1 | Depressurizing 2 | Co-current | Counter-current | Counter-current | Counter-current | Purging | Counter-current | Counter-current | Pressurizing 2 |
| C | Counter-current | Pressurizing 2 | Pressurizing 1 | Pressurizing | Adsorbing | Adsorbing | Adsorbing | Adsorbing | Depressurizing 1 | Depressurizing 2 | Co-current | Counter-current | Counter-current | Counter-current | Purging | Counter-current |
| D | Purging | Counter-current | Counter-current | Pressurizing 2 | Pressurizing 1 | Pressurizing | Adsorbing | Adsorbing | Adsorbing | Adsorbing | Depressurizing 1 | Depressurizing 2 | Co-current | Counter-current | Counter-current | Counter-current |
| E | Counter-current | Counter-current | Purging | Counter-current | Counter-current | Pressurizing 2 | Pressurizing 1 | Pressurizing | Adsorbing | Adsorbing | Adsorbing | Adsorbing | Depressurizing 1 | Depressurizing 2 | Co-current | Counter-current |
| F | Co-current | Counter-current | Counter-current | Counter-current | Purging | Counter-current | Counter-current | Pressurizing 2 | Pressurizing 1 | Pressurizing | Adsorbing | Adsorbing | Adsorbing | Adsorbing | Depressurizing 1 | Depressurizing 2 |
| G | Depressurizing 1 | Depressurizing 2 | Co-current | Counter-current | Counter-current | Counter-current | Purging | Counter-current | Counter-current | Pressurizing 2 | Pressurizing 1 | Pressurizing | Adsorbing | Adsorbing | Adsorbing | Adsorbing |

| Step/adsorption column | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Step time/s | 30 | 30 | 30 | 30 | 30 | 30 | 30 | 30 | 30 | 30 | 30 | 30 | 30 | 30 | 30 | 30 |
| H | Adsorbing | Adsorbing | Depressurizing 1 | Depressurizing 2 | Co-current | Counter-current | Counter-current | Counter-current | Purging | Counter-current | Counter-current | Pressurizing 2 | Pressurizing 1 | Pressurizing | Adsorbing | Adsorbing |

EP 4 458 451 A1

The fast-period pressure swing adsorption method of the present disclosure is described in greater detail below by way of specific embodiments, and it should be understood that the embodiments are merely illustrative and the present disclosure is not limited thereto.

Embodiment 1 (a specific temperature of 25°C)

For the adsorbate $N_2$, the minimum time corresponding to the three adsorbents (the molecular sieve 1, the molecular sieve 2, and the activated carbon 1) in Table 1 is less than 15.10 s, so all the three adsorbents meet the primary selection conditions. The molecular sieve 1 having the largest product of the slope and the adsorption amount (as shown in Table 2) is further screened from the three adsorbents, and determined as a target adsorbent.

Embodiment 2 (a specific temperature of 20°C)

In this embodiment, the composition (volume fraction) of a feed gas includes 1% of nitrogen, 8% of methane and 91% of hydrogen, the pressure is 2 MPa, the temperature is 20°C, and a flow rate is 1000 Nm$^3$/h. The goal is to purify a hydrogen product (a hydrogen purity: 99.999%) from the feed gas by using a pressure swing adsorption process.
A purification process in this embodiment is determined to be a typical 10-3-4 process, i.e., 10 adsorption columns, 3 adsorption columns being used for simultaneous adsorption, and 4 pressure equalization processes, with the yield remaining unchanged at 85%, and the material balance is shown in Table 4. According to the fast-period pressure swing adsorption method of the present disclosure, an adsorption isotherm and a desorption isotherm of an adsorbent for two adsorbates (nitrogen and methane), and the corresponding slope curves thereof are determined. Three adsorbents shown in Table 5 can achieve the fast-period pressure swing adsorption process at room temperature.

Table 4 Material balance

| Material flow name | Feedstock | Hydrogen product | Tail gas |
|---|---|---|---|
| Flow rate (Nm$^3$/h) | 1000 | 770 | 230 |
| Pressure (MPa) | 2.00 | 1.95 | 0.02 |
| Temperature (°C) | 20 | 20 | 20 |
| | (Volume fraction) | | |
| Component | Feedstock | Product | Tail gas |
| $H_2$ | $91 \times 10^{-2}$ | $99.999 \times 10^{-2}$ | $60.97 \times 10^{-2}$ |
| $CH_4$ | $8 \times 10^{-2}$ | $1 \times 10^{-6}$ | $34.69 \times 10^{-2}$ |
| $N_2$ | $1 \times 10^{-2}$ | $9 \times 10^{-6}$ | $4.33 \times 10^{-2}$ |
| Total | 100.0 | 100.0 | 100.0 |
| Yield (%) | 85 | | |

Table 5 Determination results for three adsorbents

| Absorbent type | Slope at an initial point for nitrogen | 0.1 MPa nitrogen adsorption amount | Slope at an initial point for methane | 0.1 MPa methane adsorption amount |
|---|---|---|---|---|
| Molecular | 9 | 9 ml/g | 16 | 13 ml/g |
| Molecular | 18 | 13 ml/g | 38 | 20 ml/g |
| Activated | 7 | 7 ml/g | 29 | 20 ml/g |

Based on the above determination results of the adsorbents, the purification of the feed gas to prepare hydrogen may be achieved by using one adsorbent, or the hydrogen purification may be achieved by using an adsorbent grading method. For nitrogen, the adsorption times for the three adsorbents are all less than 15.10 s (or the slopes are all less than 24), so all the three adsorbents meet the primary selection conditions; and the molecular sieve 2 with the largest slope and adsorption amount is then selected as a target adsorbent. For methane, the molecular sieve 1 has an adsorption time of less than 15.10 s (or a slope of less than 24), so the molecular sieve 1 is determined to be a target adsorbent. Moreover, since a slope of the molecular sieve 2 is larger, a minimum time 8 s corresponding to the molecular sieve 2 is determined as a minimum time for each decomposition step of pressure swing adsorption, and thus, the adsorption period can be determined to be about 2.7 min. Different adsorbents are selected, and the relationship between the adsorption period and the volume of an adsorption column is shown in Table 6.

Table 6 Applicable adsorption period and adsorption column volume for target adsorbent charging scheme

| Serial number | Absorbent charging | Adsorption | Adsorption | Adsorption |
|---|---|---|---|---|
| 1 | Molecular sieve 2+molecular sieve 1 | 2.7 | 0.12 | 100% |
| 2 (Prior art) | Molecular sieve 1 | 10 | 0.35 | 100% |

The adsorbent charging scheme 1 uses a graded bed composed of a molecular sieve 2 and a molecular sieve 1, and the molecular weight of methane is greater than that of nitrogen, so that the feed gas is subjected to methane adsorption through the molecular sieve 1 and then nitrogen adsorption through the molecular sieve 2 when the adsorbents are graded to be charged. Although the adsorption period is determined by an adsorbent having the greatest slope of the adsorption isotherm at the initial point, and an activated carbon bed can ensure that methane is completely adsorbed, and is not be carried into a molecular sieve bed, thereby maximizing the effects of both adsorbents, and the adsorption period is preferably 2.7 min. The grading scheme takes into account the adsorption period, and the adsorption amount of the adsorbents to the adsorbates, and exploits the characteristics of each adsorbent for different adsorbates, which can achieve an optimal grading process and operation cycle, and at the same time, achieve a minimum adsorption column volume.

In summary, in the present disclosure, the target adsorbent for adsorbing one or more target adsorbates is inventively selected based on the adsorbent selection method, and then pressure swing adsorption is performed on the one or more target adsorbates by using the target adsorbent at the specific temperature. Therefore, the operating and production costs of the pressure swing adsorption can be reduced by reducing the amount of adsorbents used and optimizing the pressure swing adsorption period.

An embodiment of the present disclosure further provides an adsorbent selection system, including: a memory configured to store an adsorption isotherm of each adsorbent of a plurality of adsorbents absorbing a target adsorbate; and a processor configured to: acquire a slope of an adsorption isotherm of the each adsorbent absorbing the target adsorbate at an initial pressure, wherein the adsorption isotherm is a curve of an adsorption amount as a function of pressure at a specific temperature; acquire an adsorption amount of the target adsorbate absorbed by the each adsorbent at the specific temperature and a specific pressure; and select a target adsorbent for adsorbing the target adsorbate from the plurality of the adsorbents according to the slope and the adsorption amount for the each adsorbent.

Specific details and benefits of the absorbent selection system provided by the present disclosure can refer to the above description of the adsorbent selection method, which will not be repeated here.

An embodiment of the present disclosure further provides a pressure swing adsorption system, including: the adsorbent selection system configured to select a target adsorbent for adsorbing one or more target adsorbates; and an adsorption device configured to perform pressure swing adsorption on the one or more target adsorbates by using the target adsorbent at a specific temperature.

Specific details and benefits of the pressure swing adsorption system provided by the present disclosure can refer to the above description of the pressure swing adsorption method, which will not be repeated here.

An embodiment of the present disclosure further provides a computer-readable storage medium, having stored thereon a computer program which, when executed by a processor, implements the adsorbent selection method as described above and/or the pressure swing adsorption method as described above.

Optional implementations of the embodiments of the present disclosure are described in detail above in conjunction with the accompanying drawings, however, the embodiments of the present disclosure are not limited to the specific details in the above embodiments, and many simple variations can be made to the technical solutions of the embodiments of the present disclosure within the scope of the technical idea of the embodiments of the present disclosure, and these simple variations all belong to the protection scope of the embodiments of the present disclosure.

In addition, it should be noted that the specific features described in the above specific embodiments can be combined in any suitable manner without contradiction. In order to avoid unnecessary repetition, the embodiments of the present disclosure are not further described in various possible combinations.

Those skilled in the art will appreciate that all or part of the steps in the method implementing the embodiments described above may be performed by instructing related hardware through a program, the program is stored in a storage medium and includes a plurality of instructions configured to cause a single chip microcomputer, a chip or a processor to perform all or part of the steps of the method according to the embodiments of the present application. The aforementioned storage medium includes various media capable of storing program codes, such as a USB flash disk, a mobile hard disk, a Read-Only Memory (ROM), a Random Access Memory (RAM), a magnetic disk, or an optical disk.

In addition, any combination between various implementations of the embodiments of the present disclosure may be made, and as long as they do not depart from the idea of the embodiments of the present disclosure, they should also be considered as the contents disclosed in the embodiments of the present disclosure.

**Claims**

1. An adsorbent selection method, comprising:

   acquiring a slope of an adsorption isotherm of each adsorbent of a plurality of adsorbents absorbing a target adsorbate at an initial pressure, wherein the adsorption isotherm is a curve of an adsorption amount as a function of pressure at a specific temperature;
   acquiring an adsorption amount of the target adsorbate absorbed by the each adsorbent at the specific temperature and a specific pressure; and
   selecting a target adsorbent for adsorbing the target adsorbate from the plurality of the adsorbents according to the slope and the adsorption amount for the each adsorbent.

2. The selection method according to claim 1, wherein selecting the target adsorbent for adsorbing the target adsorbate from the plurality of the adsorbents comprises:

   determining a minimum time for each decomposition step in a cycle period of pressure swing adsorption for the each adsorbent according to the slope for the each adsorbent;
   selecting a specific adsorbent from the plurality of the adsorbents according to the determined minimum time, wherein a minimum time corresponding to the specific adsorbent is less than or equal to a preset time;
   determining a product of a slope and an adsorption amount for the specific adsorbent; and
   selecting an adsorbent corresponding to the largest product as the target adsorbent.

3. The selection method according to claim 2, wherein determining the minimum time for each decomposition step in the cycle period of pressure swing adsorption for the each adsorbent comprises:

   in a case where a slope of an adsorbent is greater than a first slope and less than or equal to a second slope, a minimum time corresponding to the adsorbent is greater than or equal to a first minimum time;
   in a case where a slope of an adsorbent is greater than the second slope and less than or equal to a third slope, a minimum time corresponding to the adsorbent is greater than or equal to a second a minimum time;
   in a case where a slope of an adsorbent is greater than the third slope and less than or equal to a fourth slope, a minimum time corresponding to the adsorbent is greater than or equal to a third minimum time; or
   in a case where a slope of an adsorbent is greater than the fourth slope and less than or equal to a fifth slope, a minimum time corresponding to the adsorbent is greater than or equal to a fourth minimum time,
   wherein the first slope, the second slope, the third slope, the fourth slope, and the fifth slope gradually increase; and the first minimum time, the second minimum time, the third minimum time, and the fourth minimum time gradually increase.

4. The selection method according to claim 3, wherein in a case where the first slope is 1, the second slope is 10, the third slope is 20, the fourth slope is 30 and the fifth slope is 50, the first minimum time is 0.05 s, the second minimum time is 3 s, the third minimum time is 9 s and the fourth minimum time is 24 s.

5. The selection method according to claim 2, wherein determining the minimum time t for each decomposition step in the cycle period of pressure swing adsorption for the each adsorbent comprises:

$$t = \frac{-40}{1 + e^{(k_0 - 27)/6}} + T,$$

wherein T is a preset longest step time in s; and $k_0$ is a slope for the each adsorbent.

6. The selection method according to claim 5, wherein T is less than or equal to 40.

7. The selection method according to any one of claims 2 to 6, further comprising:

determining a minimum time corresponding to the target adsorbent as an adsorption time; and

determining the amount of the target adsorbent according to the amount of the target adsorbate introduced into an adsorption column in the adsorption time and an adsorption amount of the target adsorbent.

8. The selection method according to any one of claims 1 to 6, wherein the step of acquiring the slope of the adsorption isotherm of each adsorbent of the plurality of the adsorbents absorbing the target adsorbate at the initial pressure is performed under the condition that preset preconditions are met,

wherein the preset preconditions comprise that: an absolute value of a difference between the adsorption amounts of an adsorption isotherm and a desorption isotherm of the each adsorbent for the target adsorbate at each pressure is less than or equal to a preset ratio of an adsorption amount of an adsorption isotherm.

9. The selection method according to claim 8, wherein the preset preconditions further comprise that: the adsorption amount of the adsorption isotherm of the each adsorbent absorbing the target adsorbate at each pressure is less than or equal to the adsorption amount of the desorption isotherm,

wherein the desorption isotherm is a curve of a desorption amount as a function of pressure at the specific temperature.

10. The selection method according to any one of claims 1 to 6, wherein the specific temperature is in the range from 10°C to 40°C.

11. The selection method according to any one of claims 1 to 6, wherein the initial pressure is less than or equal to 10 kPa.

12. The selection method according to any one of claims 1 to 6, wherein the adsorbents are selected from: a microporous molecular sieve; MOFs; a carbon molecular sieve; a special adsorbent and silica gel.

13. A pressure swing adsorption method, comprising:

selecting a target adsorbent for adsorbing one or more target adsorbates according to the adsorbent selection method according to any one of claims 1 to 12; and

performing pressure swing adsorption on the one or more target adsorbates by using the target adsorbent at a specific temperature.

14. The pressure swing adsorption method according to claim 13, further comprising:

in a case where a slope of an adsorption isotherm of the target adsorbent at an initial pressure point is greater than a first preset slope and less than or equal to a second preset slope, controlling a process timing sequence of pressure swing adsorption by adopting an integrated rotary valve; or

in a case where a slope of an adsorption isotherm of the target adsorbent at an initial pressure point is greater than the second preset slope and less than or equal to a third preset slope, controlling a process timing sequence of pressure swing adsorption by adopting a program control valve.

15. The pressure swing adsorption method according to claim 13 or 14, wherein in a case where a plurality of target adsorbents are provided, the pressure swing adsorption method further comprises: grading the plurality of the target adsorbents, and

performing pressure swing adsorption on the one or more target adsorbates by using the target adsorbent at the specific temperature comprises performing pressure swing adsorption on the one or more target adsorbates by using the plurality of the target adsorbates graded at the specific temperature.

16. The pressure swing adsorption method according to claim 15, further comprising:

setting a minimum time for each decomposition step in a cycle period of pressure swing adsorption according to a slope for an adsorbent having a maximum slope of an adsorption isotherm at an initial pressure in the plurality of the target adsorbents.

17. An adsorbent selection system, comprising:

a memory configured to store an adsorption isotherm of each adsorbent of a plurality of adsorbents absorbing a target adsorbate; and

a processor configured to:

acquire a slope of an adsorption isotherm of the each adsorbent absorbing the target adsorbate at an initial pressure, wherein the adsorption isotherm is a curve of an adsorption amount as a function of pressure at a specific temperature;

acquire an adsorption amount of the target adsorbate absorbed by the each adsorbent at the specific temperature and a specific pressure; and

select a target adsorbent for adsorbing the target adsorbate from the plurality of the adsorbents according to the slope and the adsorption amount for the each adsorbent.

18. A pressure swing adsorption system, comprising:

the adsorbent selection system according to claim 17, configured to select a target adsorbent for adsorbing one or more target adsorbates; and

an adsorption device, configured to perform pressure swing adsorption on the one or more target adsorbates by using the target adsorbent at a specific temperature.

19. A computer-readable storage medium, having stored thereon a computer program which, when executed by a processor, implements the adsorbent selection method according to any one of claims 1 to 12 and/or the pressure swing adsorption method according to any one of claims 13 to 16.

S101

Acquiring a slope of an adsorption isotherm of each adsorbent of a plurality of adsorbents adsorbing a target adsorbate at an initial pressure

S102

Acquiring an adsorption amount of the target adsorbate adsorbed by the each adsorbent at the specific temperature and a specific pressure

S103

selecting a target adsorbent for adsorbing the target adsorbate from the plurality of the adsorbents according to the slope and the adsorption amount for the each adsorbent

FIG. 1

S201

A minimum time for each decomposition step in a cycle period of pressure swing adsorption for the each adsorbent is determined according to the slope for the each adsorbent

S202

A specific adsorbent is selected from the plurality of the adsorbents according to the determined minimum time

S203

A product of a slope and an adsorption amount for the specific adsorbent is determined

S204

An adsorbent corresponding to the largest product is selected as the target adsorbent

FIG. 2

FIG. 3

FIG. 4

FIG. 5

FIG. 6

FIG. 7

FIG. 8

FIG. 9

FIG. 10

FIG. 11

FIG. 12

## INTERNATIONAL SEARCH REPORT

International application No.

**PCT/CN2022/136912**

| A. | CLASSIFICATION OF SUBJECT MATTER |
|---|---|

B01D 53/047(2006.01)i;G01N15/08(2006.01)i

According to International Patent Classification (IPC) or to both national classification and IPC

| B. | FIELDS SEARCHED |
|---|---|

Minimum documentation searched (classification system followed by classification symbols)

B01D, G01N

Documentation searched other than minimum documentation to the extent that such documents are included in the fields searched

Electronic data base consulted during the international search (name of data base and, where practicable, search terms used)

CNTXT, VEN, DWPI, CNKI: 吸附等温线, 混合吸附剂, 装填, 吸附剂, 斜率, 压力, 吸附量, 选择, 挑选, 确定, adsorption isotherm, adsorption isothermal line, adsorbent, sorbent, mixed, charge, slope, pressure, adsorption capacity, selection, pick, determine

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 109425566 A (ZHONGKE JINGTOU ENVIRONMENTAL SCIENCE AND TECHNOLOGY JIANGSU CO., LTD.) 05 March 2019 (2019-03-05) <br> entire document | 1-19 |
| A | CN 112014287 A (CHINA NATIONAL PETROLEUM CORP.) 01 December 2020 (2020-12-01) <br> entire document | 1-19 |
| A | CN 113804577 A (HUBEI UNIVERSITY OF TECHNOLOGY) 17 December 2021 (2021-12-17) <br> entire document | 1-19 |
| A | CN 1291908 A (PRAXAIR TECHNOLOGY, INC.) 18 April 2001 (2001-04-18) <br> entire document | 1-19 |
| A | CN 1589368 A (WESTVACO CORP.) 02 March 2005 (2005-03-02) <br> entire document | 1-19 |
| A | CN 1668529 A (THYSSENKRUPP ENCOKE GMBH) 14 September 2005 (2005-09-14) <br> entire document | 1-19 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 February 2023** | **21 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| | International application No. |
|---|---|
| | **PCT/CN2022/136912** |

### C. DOCUMENTS CONSIDERED TO BE RELEVANT

| Category* | Citation of document, with indication, where appropriate, of the relevant passages | Relevant to claim No. |
|---|---|---|
| A | DE 2423616 A1 (SILVIU, TILENSCHI, PROF. DR.-CHEM., 4000 DUESSELDORF) 27 November 1975 (1975-11-27) entire document | 1-19 |
| X | 李旭 等 (LI, Xu et al.). "吸附等温线指导混合吸附剂装填的方法探讨 (Study on the Methods of Adsorption Isotherm Guiding Mixed Adsorbents Loading)" 广州化工 (*Guangzhou Chemical Industry*), Vol. 42, No. 13, 31 July 2014 (2014-07-31), pages 37-38, sections 2 and 3) | 1-19 |

Form PCT/ISA/210 (second sheet) (July 2022)

**INTERNATIONAL SEARCH REPORT**
Information on patent family members

| International application No. |
| --- |
| **PCT/CN2022/136912** |

| Patent document cited in search report | | | Publication date (day/month/year) | Patent family member(s) | | | Publication date (day/month/year) |
| --- | --- | --- | --- | --- | --- | --- | --- |
| CN | 109425566 | A | 05 March 2019 | None | | | |
| CN | 112014287 | A | 01 December 2020 | None | | | |
| CN | 113804577 | A | 17 December 2021 | None | | | |
| CN | 1291908 | A | 18 April 2001 | AU | 2796499 | A | 15 September 1999 |
| | | | | IN | 192147 | B | 28 February 2004 |
| | | | | WO | 9943417 | A1 | 02 September 1999 |
| | | | | US | 6444014 | B1 | 03 September 2002 |
| | | | | CA | 2321552 | A1 | 02 September 1999 |
| | | | | BR | 9908291 | A | 31 October 2000 |
| | | | | JP | 2002504419 | A | 12 February 2002 |
| | | | | EP | 1059998 | A1 | 20 December 2000 |
| | | | | KR | 20010041327 | A | 15 May 2001 |
| | | | | KR | 100582914 | B1 | 24 May 2006 |
| CN | 1589368 | A | 02 March 2005 | AU | 2002318230 | A1 | 10 June 2003 |
| | | | | EP | 1446569 | A1 | 18 August 2004 |
| | | | | EP | 1446569 | B1 | 26 September 2012 |
| | | | | USRE | 38844 | E | 25 October 2005 |
| | | | | JP | 2009079595 | A | 16 April 2009 |
| | | | | JP | 2005510654 | A | 21 April 2005 |
| | | | | JP | 4494786 | B2 | 30 June 2010 |
| | | | | KR | 20040072638 | A | 18 August 2004 |
| | | | | KR | 100762051 | B1 | 28 September 2007 |
| | | | | CA | 2466007 | A1 | 05 June 2003 |
| | | | | CA | 2466007 | C | 09 January 2007 |
| | | | | US | 6540815 | B1 | 01 April 2003 |
| | | | | WO | 03046362 | A1 | 05 June 2003 |
| | | | | MXPA | 04004785 | A | 29 April 2005 |
| CN | 1668529 | A | 14 September 2005 | BR | 0312600 | A | 19 April 2005 |
| | | | | BR | 0312600 | B1 | 23 August 2011 |
| | | | | US | 2005238552 | A1 | 27 October 2005 |
| | | | | US | 8137634 | B2 | 20 March 2012 |
| | | | | CA | 2492340 | A1 | 19 February 2004 |
| | | | | CA | 2492340 | C | 01 November 2011 |
| | | | | PT | 1525156 | E | 30 March 2007 |
| | | | | AU | 2003232743 | A1 | 25 February 2004 |
| | | | | DE | 10233820 | A1 | 12 February 2004 |
| | | | | JP | 2005533743 | A | 10 November 2005 |
| | | | | JP | 4452616 | B2 | 21 April 2010 |
| | | | | ES | 2279206 | T3 | 16 August 2007 |
| | | | | EP | 1525156 | A1 | 27 April 2005 |
| | | | | EP | 1525156 | B1 | 03 January 2007 |
| | | | | MXPA | 04012968 | A | 16 May 2005 |
| | | | | ZA | 200500278 | B | 26 July 2006 |
| | | | | DE | 50306203 | D1 | 15 February 2007 |
| | | | | TW | 200401745 | A | 01 February 2004 |
| | | | | TWI | 264413 | B | 21 October 2006 |
| | | | | WO | 2004014791 | A1 | 19 February 2004 |
| | | | | KR | 20050114207 | A | 05 December 2005 |
| | | | | KR | 100743435 | B1 | 30 July 2007 |

Form PCT/ISA/210 (patent family annex) (July 2022)

INTERNATIONAL SEARCH REPORT
Information on patent family members

International application No.

**PCT/CN2022/136912**

| Patent document cited in search report | | | Publication date (day/month/year) | Patent family member(s) | | | Publication date (day/month/year) |
|---|---|---|---|---|---|---|---|
| | | | | AT | 350336 | T | 15 January 2007 |
| | | | | PL | 372985 | A1 | 08 August 2005 |
| | | | | PL | 201490 | B1 | 30 April 2009 |
| DE | 2423616 | A1 | 27 November 1975 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111681815